# EUROPEAN PATENT APPLICATION

(11) **EP 4 681 994 A1**
(43) Date of publication of application: **21.01.2026**
(21) Application number: 25189927.4
(22) Date of filing: 16.07.2025
(51) Int. Cl.: B60R 21/214, B60R 21/2165

(54) **ROOF AIRBAG PANEL LINING AND VEHICLE**

(30) Priority: 19.07.2024 BR 102024014933
(71) Applicant: Stellantis Automoveis Brasil Ltda, 32669-900 Betim, MG (BR)
(72) Inventor: SANTA ROSA VELOSO, Kelmer, 32669-900 BETIM, MG (BR); GONÇALVES DOS SANTOS, Leonardo, 32669-900 BETIM, MG (BR); BASSETTI CAVALCANTE, Andre Luiz, 32669-900 BETIM, MG (BR); VIEIRA ANDRADE, Diego, 32669-900 BETIM, MG (BR); MIRANDA MATTIA, Bruno, 32669-900 BETIM, MG (BR); KIYOSHI, Roberto, 32669-900 BETIM, MG (BR)
(74) Representative: Studio Torta S.p.A.

(57) **Abstract**

The present invention discloses a roof airbag panel lining, comprising at least one weakening portion which comprises at least one pre-cut, at least one weakening line, wherein the weakening portion and the weakening line are oriented towards the inside of the vehicle cabin, wherein the weakening portion is above the rearview mirror and wherein the weakening line is close to the vehicle's sun visor. Furthermore, the present invention uses ultrasonic weakening to weaken the weakening portions. The present invention aims to disclose a roof airbag panel lining with weakening portions that facilitate the opening and expansion of the airbag, further minimizing the time it takes for the roof airbag to release without compromising the visual appearance and rigidity of the vehicle lining.

## Description

### Field of the Invention

The present invention is in the field of vehicles provisions or accessories to protect or prevent injuries to occupants or pedestrians in the event of accidents or other traffic risks. More specifically, the present invention is inserted in the context of roof panel linings for airbags installed on the roof of a vehicle.

### Background of the Invention

Roof airbags, popularly known as Bag in Roof (BIR) represent an innovation in the field of automotive safety systems, offering an alternative and efficient approach to protecting vehicle's occupants in the event of a collision. Traditionally, airbags are installed in the steering wheel, dashboard or sides of the vehicle, however, although less common, there are also airbags designed for installation on the roof of the vehicle, called roof airbags. This location allows for a more even distribution of protection and can improve the effectiveness of airbags in certain accident situations, especially in frontal and side collisions, or in cases where a vehicle rolls over.

Installed in the roof, these airbags can help to prevent injuries to the head, neck and upper body, areas that are particularly vulnerable during an accident. In addition, this configuration can provide better protection for all occupants, regardless of their position in the vehicle, thus increasing overall passenger safety.

In addition, the implementation of roof airbags also offers benefits in terms of vehicle design and interior space, as it frees up space in the steering wheel and dashboard. It allows car designers more freedom to create more ergonomic and aesthetically pleasing interiors.

On the other hand, a problem related to roof airbags is the delay in the full releasing of this structure, due to incorrect or ineffective tearing of the roof lining fabrics, reducing the effectiveness of the airbags and putting passengers at risk.

Document FR3137338 discloses an assembly of trim pieces for the interior of a vehicle comprising a lining produced by at least: a support panel made of composite material, either composite or injected, combined with at least thermoplastic resin and reinforcing fibers, a lining having at least one surface oriented towards the interior of the vehicle, the lining comprising: a cover intended to create a surface oriented towards the interior of the vehicle, made of material adapted to be torn under the effect of a force exerted against the surface opposite to the surface oriented towards the interior of the vehicle, an interface for assembling or adhering the lining to the support panel, this interface for assembling or adhering having at least one adhesive composition capable of adhering to the support panel. The assembly also comprises at least one weakening formed by a blind cavity in the thickness of the overlap of the assembly. However, it is noted that the document does not mention where the weakening is positioned, nor in what way it is projected in the vehicle. Furthermore, the document also fails to mention the possibility of using ultrasonic weakening to induce the weakening of the structure.

In regard to the state-of-the-art solutions, it can be seen that they do not solve the technical problem related to the delay in the airbag releasing, in a way that can ensure the correct tearing of the panel lining fabrics, showing therefore the need for new solutions in the market.

### Objects of the Invention

The present invention aims to disclose a roof airbag panel lining with weakening portions that facilitate the opening and expansion of the airbag.

More specifically, the present invention aims to disclose a roof airbag panel lining that minimizes the releasing time of the roof airbag without compromising the visual appearance and rigidity of the vehicle's lining.

### Summary Description of the Invention

The present invention discloses a roof airbag panel lining, comprising at least one weakening portion with at least one pre-cut and at least one weakening line, wherein the weakening portion and the weakening line are oriented towards the inside of the vehicle cabin, wherein the weakening portion is above the rearview mirror, perpendicular to the edge of the roof lining and wherein the weakening line is close to the vehicle's sun visor, parallel to the base of the sun visor.

The weakening portion comprises at least one portion weakened by ultrasonic embrittlement.

The weakening line comprises at least one portion weakened by ultrasonic embrittlement.

The weakening line is made by compression, wherein the compression covers 40% of the roof lining thickness.

The weakening line is 2 mm deep.

The roof airbag panel lining comprises at least 5 (five) layers of material, wherein the layers corresponding to the weakening portion and to the weakening line are designed to be easily torn under the action of external forces and to facilitate the release of the airbag into the vehicle cabin.

The roof airbag panel lining comprises at least one of the following materials: TNT Fabric, Glass Fiber, Resin, PU rigid Foam, Fabric non-woven with PE barrier.

The present invention also discloses a vehicle, comprising a roof airbag panel lining as defined by the present invention.

### Brief Description of the Drawings

The present invention will be described in more detail with the support of the attached figures, which show a preferred form of carrying out the invention.
The figures show:

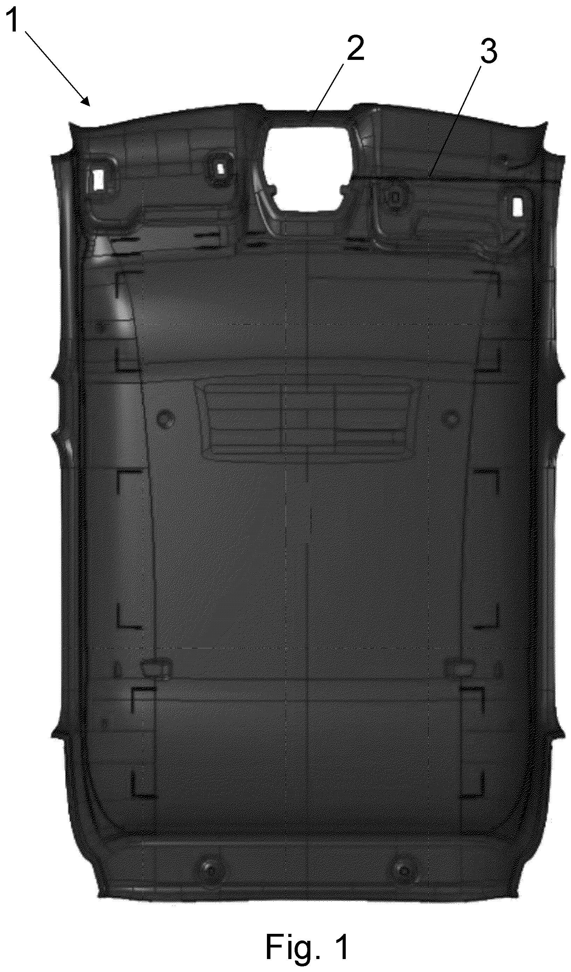

Figure 1 shows a vehicle roof airbag panel lining, with the weakening portion and the weakening lines.

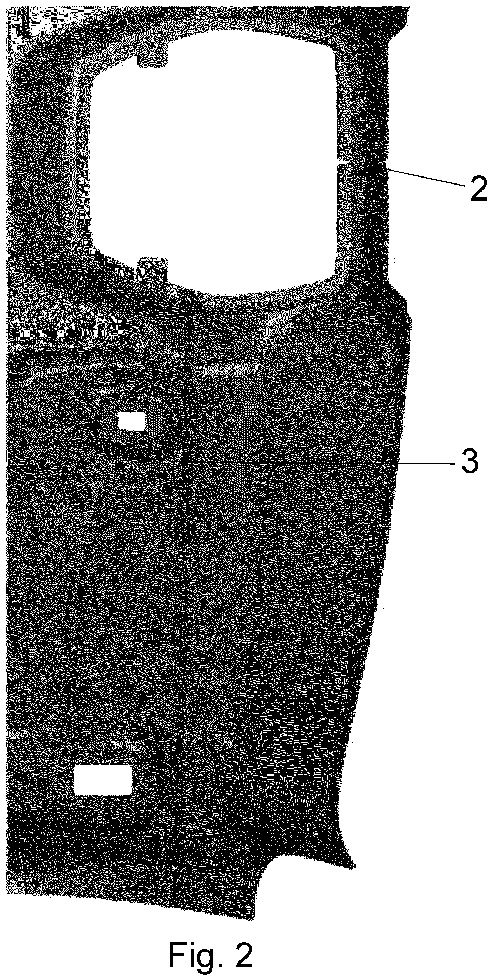

Figure 2 shows a portion of a vehicle roof airbag panel lining, with the weakening portion and the weakening lines seen in close-up.
Figure 3 shows a portion of a vehicle roof airbag panel lining, with the weakening portion seen in close-up.
Figure 4 shows a portion of a vehicle roof airbag panel lining, with the weakening lines seen in close-up.

The numeral references used in this application are: 1 - roof airbag panel lining; 2 - weakening portion; and 3 - weakening line.

### Detailed Description of the Invention

Before the invention is described in detail, it should be understood that it is not limited to the specific component parts of the apparatus described, since such components may vary. It should also be understood that the terminology used herein is for the purpose of describing particular embodiments only and is not intended to be limiting. It should be noted that, as used in the specification and appended claims, only the singular forms "a," "an," and "the" include singular and/or plural references, unless the context clearly indicates otherwise. Furthermore, it should be understood that, where parameter ranges delimited by numerical values are provided, the ranges are deemed to include such limiting values.

It should further be considered that the embodiments disclosed herein should not be understood as individual embodiments that would not relate to one another. Features discussed with one embodiment are to be disclosed in connection with other embodiments shown herein as well. If, in the event a specific feature is not disclosed with an embodiment but with another one, the Expert on the matter would understand that this does not necessarily mean that the feature is not intended to be disclosed with the other embodiment. The Expert on the matter would understand that the essence of this application is to disclose the feature also for the other embodiment, but only for clarity end and to keep this descriptive report at a manageable way - this has not been done.

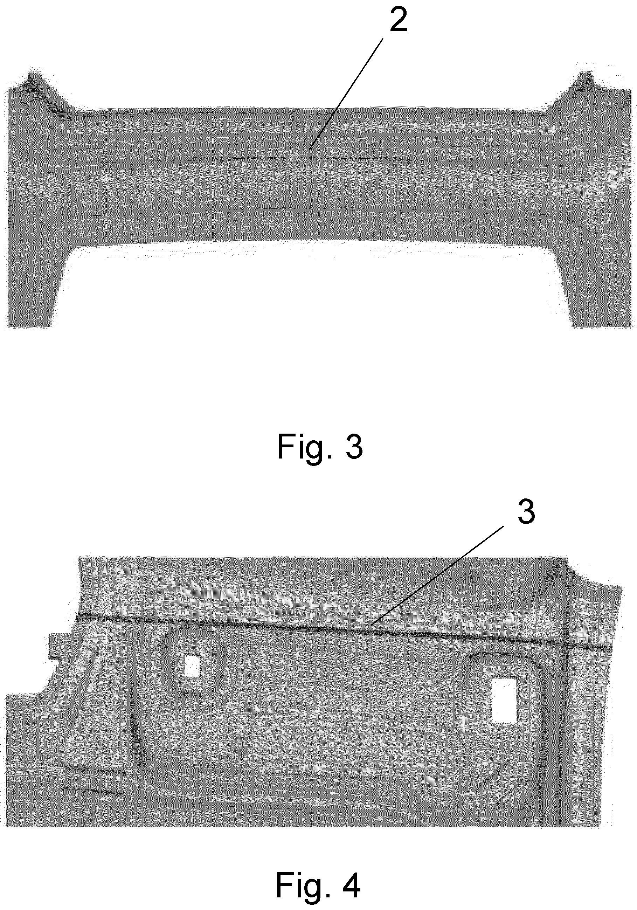

The present invention relates to a roof airbag panel lining 1, comprising at least one weakening portion 2 comprising at least one pre-cut and at least one weakening line 3, wherein the weakening portion 2 and the weakening line 3 are oriented towards the inside of the vehicle cabin, wherein the weakening portion 2 is above the rear-view mirror, perpendicular to the edge of the roof lining as illustrated in figure 3 and wherein the weakening line 3 is close to the vehicle's sun visor, parallel to the base of the sun visor, as illustrated in figure 4.

The weakening portion 2 and the weakening line 3 are considered weakening zones. Weakening zones in mechanical structures are areas intentionally designed to deform in a controlled manner under extreme forces, such as impacts. These zones, commonly found in the automotive, civil engineering and aeronautical industries, help to absorb and dissipate crash energy, reducing the force transmitted to occupants and critical components. For example, in vehicles, said zones are incorporated into bumpers, side spars and doors to ensure that deformation occurs in specific locations, protecting occupants and making it easier to open doors after an accident. These zones are carefully designed using materials and geometries that allow for controlled deformation, such as notches and areas of reduced thickness.

There are several techniques available to create weakening zones. This is achieved through methods such as the incorporation of pre-cuts, which are notches or cuts made during manufacturing to deliberately weaken these areas. In addition, weakening lines are used, which are molded or engraved grooves that drive the deformation. These techniques allow impact energy to be absorbed and dissipated efficiently, protecting critical parts of the structure and occupants of the vehicle. It is also common the use of specific materials, such as lower-strength metal alloys or specialized polymers, to facilitate controlled deformation.

Preferably, the weakening portion 2 comprises at least one portion weakened by ultrasonic embrittlement.

Ultrasonic embrittlement is a process in which ultrasonic waves are applied to materials to induce failure or facilitate their breakage. These waves generate intense vibrations that can cause the formation of microcracks and, eventually, the breakage of the material. In addition, the intensity of the ultrasonic waves can be adjusted to control the degree of embrittlement, allowing a customized application for different materials and needs. Thus, by applying ultrasonic waves, it is possible to induce controlled failures or reveal internal defects, contributing to the safety, quality and efficiency of manufacturing and maintenance processes.

The weakening line 3 comprises at least a portion weakened by ultrasonic embrittlement.

Preferably, the weakening line 3 is made by compression and the compression preferably covers 40% of the roof lining thickness.

The compression weakening lines 3 are created by applying a controlled force to imprint depressions or notches in the material, resulting in areas that deform in a predictable manner under stress. Using hydraulic or mechanical presses, these lines are precisely designed to ensure consistency and efficiency, and are inspected to meet safety specifications.

The weakening line 3 is 2 mm deep.

The roof airbag panel lining 1 comprises at least 5 layers of material, wherein the layers corresponding to the weakening portion 2 and the weakening line 3 are designed to be easily torn under the action of external forces to facilitate the release of the airbag into the vehicle cabin.

The roof lining material should be chosen to allow the creation of weakening lines 3. Common materials include laminated fabrics, fiberglass or lightweight composites that are strong enough to maintain structural integrity but can be weakened in a controlled manner.

The roof airbag panel lining 1 comprises at least one of the following materials: TNT Fabric, Glass Fiber, Resin, PU rigid Foam, Fabric non-woven with PE barrier.

The present invention also discloses a vehicle comprising a dashboard lining for a roof airbag 1 as defined by the present invention.

The invention achieves the proposed objects because it solves the problem related to the delay in the full activation of airbags, due to incorrect or ineffective tearing of the fabrics of the dashboard lining. Furthermore, the present invention minimizes the time it takes for the roof airbag to release without compromising the visual appearance and rigidity of the vehicle lining.

It should be noted that the submitted drawings are not necessarily at scale, and are merely conceptual in nature. Nevertheless, it is expressly provided that all combinations of elements that perform the same function in substantially the same way to achieve the same results as the elements claimed herein are within the scope of the present invention. Finally, it should be noted that the scope of protection of the present invention encompasses other possible variations, and is not limited solely by the content of the claims, including possible equivalents.

## Claims

1. A roof airbag panel lining (1), comprising:
- at least one weakening portion (2) comprising at least one pre-cut;
- at least one weakening line (3),
wherein the weakening portion (2) and the weakening line (3) are oriented towards the inside of the vehicle cabin;
wherein the weakening portion (2) is above the rearview mirror, perpendicular to the edge of the roof lining; and
wherein the weakening line (3) is close to the vehicle's sun visor, parallel to the base of the sun visor.

2. A roof airbag panel lining (1), according to claim 1, wherein the weakening portion (2) comprises at least one weakened portion through ultrasonic embrittlement.

3. Roof airbag panel lining (1), according to claim 1, wherein the weakening line (3) comprises at least one weakened portion through ultrasonic embrittlement.

4. Roof airbag panel lining (1), according to claim 1, wherein the weakening line (3) is made through compression and wherein the compression covers 40% of the roof lining thickness.

5. Roof airbag panel lining (1), according to claim 1, wherein the weakening line (3) is 2 mm deep.

6. Roof airbag panel lining (1), according to claim 1, wherein it comprises at least 5 layers of material and wherein the layers corresponding to the weakening portion (2) and the weakening line (3) are designed to be easily torn under the action of external forces and facilitate the release of the airbag into the vehicle cabin.

7. Roof airbag panel lining (1), according to claim 1, wherein it comprises at least one of the following materials: TNT Fabric, Glass Fiber, Resin, PU rigid Foam, Fabric non-woven with PE barrier.

8. Vehicle, **characterized by** comprising a roof airbag panel lining (1) as defined by claim 1.
